# EUROPEAN PATENT SPECIFICATION

(11) **EP 2 655 062 B1**
(45) Date of publication and mention of the grant of the patent: **20.11.2019**
(21) Application number: 11805040.0
(22) Date of filing: 22.12.2011
(51) Int. Cl.: B32B 27/32, B32B 27/08, B32B 27/30, B32B 27/34, B65D 65/40

(54) **MULTILAYER HEAT SHRINKABLE FILMS COMPRISING A PLURALITY OF MICROLAYERS**
MEHRLAGIGE WÄRMESCHRUMPFBARE FOLIEN MIT MEHREREN MIKROLAGEN
PELLICULES THERMORÉTRACTABLES MULTICOUCHES COMPRENANT UNE PLURALITÉ DE MICROCOUCHES

(30) Priority: 22.12.2010 EP 10196680
(43) Date of publication of application: 30.10.2013
(73) Proprietor: Cryovac, LLC, Charlotte, NC 28208 (US)
(72) Inventor: RE FRASCHINI, Marco, I-20014 Nerviano (Milan) (IT); SPIGAROLI, Romano, I-20025 Legnano (MI) (IT); URSINO, Felice, I-20107 Rho (Milan) (IT); D'APOLLO, Francesca, I-20015 Parabiago (IT)
(74) Representative: Fraire, Cristina
(86) International application number: PCT/EP2011/073865
(87) International publication number: WO 2012/085240

(56) References cited:
- WO-A1-2010/015402
- US-A- 5 387 470
- US-A1- 2010 227 136

## Description

### Technical Field

The present invention relates to multilayer gas-barrier heat shrinkable films, comprising a plurality of microlayers and to their use in packaging articles, in particular food items, preferably meat and cheese.

### Background Art

For several decades, heat-shrinkable packaging articles have been used for the packaging of a variety of products. Through the years, these heat-shrinkable packaging articles have been formulated in order to have good abuse resistance, improved gas barrier properties and high free shrink at lower temperatures.

Moreover several efforts have been done in the technical field to improve machinability of these heat-shrinkable packaging films and to decrease leakers occurrence due to accidental opening or rupture of the package during the packaging process or subsequent handling. In fact, defective packages result in a reduced shelf life due to atmospheric oxygen and microbes entering the package.

There is still the need to improve the above mentioned properties by increasing the abuse and tear propagation resistance, by ensuring high heat shrink values at comparable thickness or, preferably, even at lower thicknesses.

We have surprisingly found that it is possible to obtain packaging films endowed with improved mechanical properties, optimal shrinkability, very good processability, satisfactory optics and gas-barrier performance at comparable or even lower thickness with respect to the films known in the art.

### Disclosure of Invention

A first object of the present invention is a multilayer gas-barrier, heat-shrinkable film comprising:
- an outer heat sealable layer (1),
- a core layer (2),
- a barrier layer (4) interposed between the core layer (2) and the outer layer (6),
- an outer layer (6),
characterized in that the core layer (2) comprises a sequence of micro-layers (a), said sequence comprising at least a resin A selected among LLDPE, EVA, VLDPE, and ULDPE and a resin B selected among VLDPE, LDPE, m-LLDPE, EPB and LLDPE, wherein said sequence of micro-layers (a) comprises from 10 to 100 micro-layers, the total thickness of the film is from 20 to 60 µm and the core layer thickness is from 10 to 50 µm.

A second object of the present invention is a flexible container for packaging obtainable by self-sealing a film according to the first object, such as pouches, bags, and tubings.

A third object of the present invention is a package comprising a container according to the second object and a product packaged in said container.

A fourth object of the present invention is the use of a film according to the first object for packaging, preferably for food packaging.

### Definitions

As used herein, the term "film" is inclusive of plastic web, regardless of whether it is film or sheet.

As used herein, the phrases "inner layer" and "internal layer" refer to any film layer having both of its principal surfaces directly adhered to another layer of the film.

As used herein, the phrase "outer layer" refers to any film layer having only one of its principal surfaces directly adhered to another layer of the film

As used herein, the phrases "seal layer", "sealing layer", "heat seal layer", and "sealant layer", refer to an outer layer involved in the sealing of the film to itself, to another layer of the same or another film, and/or to another article which is not a film.

As used herein, the term "core", and the phrase "core layer", refers to any inner film layer that preferably has a function other than serving as an adhesive or compatibilizer for adhering two layers to one another.

As used herein, the phrase "tie layer" refers to any inner film layer having the primary purpose of adhering two layers to one another.

As used herein, the phrase "machine direction", herein abbreviated "MD" or "longitudinal direction", herein abbreviated "LD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine or longitudinal direction.

As used herein, the phrases "heat-shrinkable," "heat-shrink," and the like, refer to the tendency of the film to shrink upon the application of heat, i.e., to contract upon being heated, such that the size of the film decreases while the film is in an unrestrained state. As used herein said term refer to films with a free shrink in each of the machine and the transverse directions, as measured by ASTM D 2732, of at least 5 % at 85°C.

As used herein, the term "polymer" refers to the product of a polymerization reaction, and is inclusive of homo-polymers, and co-polymers.

As used herein, the term "homo-polymer" is used with reference to a polymer resulting from the polymerization of a single monomer, i.e., a polymer consisting essentially of a single type of mer, i.e., repeating unit.

As used herein, the term "co-polymer" refers to polymers formed by the polymerization reaction of at least two different monomers. For example, the term "co-polymer" includes the co-polymerization reaction product of ethylene and an alpha -olefin, such as 1-hexene. When used in generic terms the term "co-polymer" is also inclusive of, for example, ter-polymers. The term "co-polymer" is also inclusive of random co-polymers, block co-polymers, and graft co-polymers.

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts.

As used herein, the phrase "homogeneous polymer" refers to polymerization reaction products of relatively narrow molecular weight distribution and relatively narrow composition distribution. Homogeneous polymers are structurally different from heterogeneous polymers, in that homogeneous polymers exhibit a relatively even sequencing of co-monomers within a chain, a mirroring of sequence distribution in all chains, and a similarity of length of all chains, i.e., a narrower molecular weight distribution. This term includes those homogeneous polymers prepared using metallocene, or other single-site type catalysts, as well as those homogenous polymers that are obtained using Ziegler Natta catalysts in homogenous catalysis conditions. Homogeneous polymers are herein indicate with the prefix m-, i.e. m-LLDPE.

As used herein, the term "polyolefin" refers to any polymerized olefin, which can be linear, branched, cyclic, aliphatic, aromatic, substituted, or unsubstituted. More specifically, included in the term polyolefin are homo-polymers of olefin, co-polymers of olefin, co-polymers of an olefin and an non-olefinic co-monomer co-polymerizable with the olefin, such as vinyl monomers, modified polymers thereof, and the like. Specific examples include polyethylene homo-polymer, polypropylene homo-polymer, polybutene homo-polymer, ethylene- alpha -olefin co-polymer, propylene-alpha -olefin co-polymer, butene- alpha -olefin co-polymer, ethylene-unsaturated ester co-polymer, ethylene-unsaturated acid co-polymer, (e.g. ethylene-ethyl acrylate co-polymer, ethylene-butyl acrylate co-polymer, ethylene-methyl acrylate co-polymer, ethylene-acrylic acid co-polymer, and ethylene-methacrylic acid co-polymer), ethylene-vinyl acetate copolymer, ionomer resin, polymethylpentene, etc.

As used herein the term "ionomer" refers to the products of polymerization of ethylene with an unsaturated organic acid, and optionally also with an unsaturated organic acid (C1-C4)-alkyl ester, partially neutralized with a mono- or divalent metal ion, such as lithium, sodium, potassium, calcium, magnesium and zinc. Typical unsaturated organic acids are acrylic acid and methacrylic acid because they are thermally stable and commercially available. Unsaturated organic acid (C1-C4)-alkyl esters are typically (meth)acrylate esters, e.g. methyl acrylate and isobutyl acrylate. Mixtures of more than one unsaturated organic acid comonomer and/or more than one unsaturated organic acid (C1-C4)-alkyl ester monomer can also be used in the preparation of the ionomer.

As used herein the term "modified polyolefin" is inclusive of modified polymer prepared by co-polymerizing the homo-polymer of the olefin or co-polymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homo-polymer or co-polymer, by blending or preferably by grafting, an unsaturated carboxylic acid, e.g., maleic acid, fumaric acid or the like, or a derivative thereof such as the anhydride, ester or metal salt or the like.

As used herein, the phrase "ethylene- alpha -olefin copolymer" refers to such heterogeneous materials as linear low density polyethylene (LLDPE) with a density usually in the range of from about 0.910 g/cm³ to about 0.930 g/cm³, linear medium density polyethylene (LMDPE) with a density usually in the range of from about 0.930 g/cm³ to about 0.945 g/cm³, and very low and ultra low density polyethylene (VLDPE and ULDPE) with a density lower than about 0.915 g/cm³; and homogeneous polymers such as metallocene-catalyzed EXACT™ and EXCEED™ homogeneous resins obtainable from Exxon, single-site AFFINITY™ resins obtainable from Dow, and TAFMER™ homogeneous ethylene- alpha -olefin copolymer resins obtainable from Mitsui. All these materials generally include co-polymers of ethylene with one or more co-monomers selected from (C4-C10)- alpha -olefin such as butene-1, hexene-1, octene-1, etc., in which the molecules of the copolymers comprise long chains with relatively few side chain branches or cross-linked structures.

As used herein, the term "adhered" is inclusive of films which are directly adhered to one another using a heat-seal or other means, as well as films which are adhered to one another using an adhesive which is between the two films. As used herein, the phrase "directly adhered", as applied to layers, is defined as adhesion of the subject layer to the object layer, without a tie layer, adhesive, or other layer therebetween. In contrast, as used herein, the word "between", as applied to a layer expressed as being between two other specified layers, includes both direct adherence of the subject layer to the two other layers it is between, as well as a lack of direct adherence to either or both of the two other layers the subject layer is between, i.e., one or more additional layers can be imposed between the subject layer and one or more of the layers the subject layer is between.

As used herein the term "gas-barrier" when referred to a layer, to a resin contained in said layer, or to an overall structure, refers to the property of the layer, resin or structure, to limit to a certain extent passage through itself of gases.

When referred to a layer or to an overall structure, the term "gas-barrier" is used herein to identify layers or structures characterized by an Oxygen Transmission Rate (evaluated at 23°C and 0 % R.H. according to ASTM D-3985) of less than 500 cm³/ m²·day·atm, preferably lower than 100 cm³/m²·day·atm.

Detailed description of the invention

A first object of the present invention is a multilayer film comprising:
- an outer heat sealable layer (1),
- a core layer (2),
- a gas-barrier layer (4) interposed between the core layer (2) and the outer layer (6),
- an outer layer (6),
characterized in that the core layer (2) comprises a sequence of micro-layers (a), said sequence comprising at least a resin A selected among LLDPE, EVA, VLDPE, and ULDPE and a resin B selected among VLDPE, LDPE, m-LLDPE, EPB and LLDPE, wherein said sequence of micro-layers (a) comprises from 10 to 100 micro-layers, the total thickness of the film is from 20 to 60 µm and the core layer thickness is from 10 to 50 µm.

In a preferred embodiment said sequence of micro-layers (a) comprises from 25 to 50 micro-layers.

In a preferred embodiment said sequence (a) comprises at least a pair of resins A and B selected among the pairs LLDPE / VLDPE, EVA / LDPE, VLDPE / m-LLDPE, EVA / EPB and ULDPE / LLDPE.

In a more preferred embodiment said sequence (a) consists of a pair of resins A and B selected among the pairs LLDPE / VLDPE, EVA / LDPE, VLDPE / m-LLDPE, EVA / EPB and ULDPE / LLDPE.

In a preferred embodiment said resins A and B are blended (A+B), alternated (A/B) or both blended and alternated within the sequence (a).

In a preferred embodiment the micro-layer arrangement and composition in the sequence (a) is selected among (A+B)n , (A/B)n, (A/B)n/A, [A/(A+B)]n, [A/(A+B)]n/A and [(A+B)/B]n/(A+B) where n is an integer number.

In a preferred embodiment the weight ratio between resin A and resin B in the core layer is from 9:1 to 1:9, preferably from 7:3 to 3:7.

In a preferred embodiment the core layer thickness is from 15 to 40 µm.

In the film of the present invention resin A is selected among LLDPE, EVA, VLDPE, and ULDPE and resin B among VLDPE, LDPE, m-LLDPE, EPB and LLDPE.

As used herein the term LLDPE refers to linear low density polyethylene generally having a density range of 0.910 to 0.930 g/cm³. LLDPE is a substantially a linear polymer with significant numbers of short branches (made by copolymerization of ethylene with short-chain alpha-olefins such as 1- butene, 1-hexene or 1-octene), usually manufactured by the Ziegler process in a low or high pressure process.

As used herein the term EVA refers to "ethylene-vinyl acetate copolymer" (EVA), a copolymer formed from ethylene and vinyl acetate monomers wherein the ethylene units are present in a major amount and the vinylacetate (VA) units are present in a minor amount, preferably VA being from 4 to 28%.

As used herein the term VLDPE refers to a very low density polyethylene having a density range of 0.880-0.915 g/cm³. VLDPE is a substantially linear polymer with high levels of short-chain branches, commonly made by copolymerization of ethylene with short-chain alpha-olefins (for example, 1-butene, 1-hexene and 1-octene). VLDPE is most commonly produced using metallocene catalysts due to the greater co-monomer incorporation exhibited by these catalysts.

As used herein the term ULDPE refers to ultra low density polyethylene having a density of 0.86 to 0.899 g/cm³ and intermediate properties between those of ethylene- alpha -olefin copolymer rubbers and linear low density polyethylenes (LLDPE). Under this term plastomers are also to be meant. ULDPE resins are prepared by Ziegler process in the presence of a Ziegler catalyst system.

As used herein the term LDPE refers to low density polyethylene having generally a density range from 0.910 to 0.940 g/cm³. LDPE generally has a high degree of short and long chain branching and it is produced by free radical polymerization.

As used herein the term m-LLDPE refers to a polyethylene produced with a metallocene catalyst, generally having a density ranging from 0.91 to 0.950 gr/cm³, preferably from 0.91 to 0.925 gr/cm³.

As used herein the term EPB refers to ethylene-propylene-butene terpolymers, generally having a density from 0.870 to 0.900 gr/cm³.

The outer heat sealable layer (1) of the present film comprises one or more resins independently selected from the group consisting of polyethylene homo-polymer, heterogeneous or homogeneous ethylene-alpha -olefm copolymer, ethylene-vinyl acetate co-polymer, ethylene-ethyl acrylate co-polymer, ethylene-butyl acrylate co-polymer, ethylene-methyl acrylate co-polymer, ethylene-acrylic acid co-polymer, ethylene-methacrylic acid co-polymer, ionomer and blends thereof in any proportion.

Preferred resins will be ethylene-vinyl acetate copolymers, linear ethylene-alpha -olefin copolymers, homogeneous or heterogeneous, and blends of two or more of these resins. Said first outer layer will be the heat-sealing layer and the preferred resins for this layer will have a seal initiation temperature lower than 110°C, more preferably a seal initiation temperature lower than 105°C, and yet more preferably a sealing initiation temperature lower than 100°C.

The gas-barrier layer (4) of the film of the present invention comprises at least one gas barrier resin generally selected from vinylidene chloride copolymers (PVDC), ethylene-vinyl alcohol copolymers (EVOH), polyamides and acrylonitrile-based copolymers. Preferred resins are typically PVDC, EVOH, polyamides/copolyamides and blends of EVOH with polyamides/copolyamides. The most preferred resin is PVDC. This term includes copolymers of vinylidene chloride and at least one mono-ethylenically unsaturated monomer copolymerizable with vinylidene chloride. The mono-ethylenically unsaturated monomer may be used in a proportion of 2-40 wt. %, preferably 4-35 wt. %, of the resultant PVDC. Examples of the mono-ethylenically unsaturated monomer may include vinyl chloride, vinyl acetate, vinyl propionate, alkyl acrylates, alkyl methacrylates, acrylic acid, methacrylic acid, and acrylonitrile. The vinylidene chloride copolymer can also be a ter-polymer. It is particularly preferred to use a copolymer with vinyl chloride or (C1 -C8)-alkyl (meth)acrylate, such as methyl acrylate, ethyl acrylate or methyl methacrylate, as the comonomers. It is also possible to use a blend of different PVDC such as for instance a blend of the copolymer of vinylidene chloride with vinyl chloride with the copolymer of vinylidene chloride with methyl acrylate. Blends of PVdC and polycaprolactone (as those described in patent EP2064056 B1, example 1 to 7) are also possible and particularly useful for respiring food products as some cheeses. The PVDC may contain suitable additives as known in the art, i.e.stabilisers, antioxidizers, plasticizers, hydrochloric acid scavengers, etc. that may be added for processing reasons or/and to control the gas-barrier properties of the resin.

Ethylene-vinyl alcohol copolymers will be preferably employed when a particularly good flexibility is required or when a fully coextruded, irradiated structure is manufactured because EVOH withstands irradiation without being degraded, up to a very high energy level. It will be used alone or admixed with one or more polyamides and/or copolyamides.

Polyamides and copolyamides can also be employed alone as gas-barrier resins. Particularly preferred in this case are the partially aromatic polyamides/copolyamides such as the polyamide formed by polycondensation between methaxylylenediamine and adipic acid (MXD6), the polyamide formed from hexamethylenediamine and terephthalic acid or isophthalic acid (6T, 61), the copolyamide formed from hexamethylenediamine, terephthalic acid and isophthalic acid (6I/6T) and the copolyamide formed from methaxylylenediamine, adipic acid and isophthalic acid (MXD6/MXDI).

In general amorphous or semi-crystalline polyamides/copolyamides are preferred.

Once the gas-barrier resin has been selected, its thickness will be set to provide for the desired oxygen transmission rate (OTR). High barrier structures will have an OTR (evaluated at 23°C and 0 % R.H. according to ASTM D-3985) below 100 cm³/m²·day·atm and preferably below 80 cm³/m²·day·atm and will be particularly suitable for meat packaging, including fresh red meat and processed meat. Higher OTR will be preferred for packaging e.g. most of the cheeses where generally OTR of from about 100 to about 500 cm³/m²·day·atm are preferred and from about 150 to about 450 cm³/m²·day·atm mostly preferred.

The outer layer (6) of the film of the present invention comprises any suitable thermoplastic material such as any polyamides, polyolefin, modified polyolefin or any blend thereof.

Preferred resins for the outer layer (6) are however ethylene homo-polymers and ethylene co-polymers, and more preferred are ethylene-alpha -olefin copolymers, particularly those with a density of from about 0.895 to about 0.925 g/cm³, and more preferably of from about 0.900 and about 0.920 g/cm³, ethylene-vinyl acetate copolymers, particularly those with a vinyl acetate content of from about 4 to about 14 % by weight, ionomers, and their blends.

Additional layers, such as for instance tie layers, to improve interlayer adhesion, may be present.

Tie layers may be disposed between the respective layers in case where a sufficient adhesion is not ensured between adjacent layers. The adhesive resin may preferably comprise one or more polyolefins, one or more modified polyolefins or a blend of the above. Specific, not limitative, examples thereof may include: ethylene-vinyl acetate copolymers, ethylene-(meth)acrylate copolymers, ethylene- alpha -olefin copolymers, any of the above modified with carboxylic or preferably anhydride functionalities, elastomers, and a blend of these resins.

In all the film layers, the polymer components may contain appropriate amounts of additives normally included in such compositions. Some of these additives are preferably included in the outer layers or in one of the outer layers, while some others are preferably added to inner layers. These additives include slip and anti-block agents such as talc, waxes, silica, and the like, antioxidants, stabilizers, plasticizers, fillers, pigments and dyes, cross-linking inhibitors, cross-linking enhancers, UV absorbers, antistatic agents, anti-fog agents or compositions, and the like additives known to those skilled in the art of packaging films.

The films according to the present invention are heat-shrinkable, i.e. they show a % free shrink in each direction of at least 5 % at 85°C (according to ASTM D2732). Preferably however they show a % free shrink at 85°C higher than 10 in at least one direction, more preferably a % free shrink at 85°C higher than 10 in each direction. Preferred films are also those showing a % free shrink higher than 15 in at least one direction at a temperature of 85°C and more preferred those showing a % free shrink higher than 20 in at least one direction at a temperature of 85°C. Even more preferred are those films showing a % free shrink at 85°C which is higher than 15 in each direction and mostly preferred are those films showing a % free shrink at 85°C which is higher than 20 in each direction.

The films according to the present invention can be suitably manufactured by the so-called trapped-bubble process, which is a known process typically used for the manufacture of heat-shrinkable films for food contact packaging. According to said process, the multilayer film is co-extruded preferably through a round die equipped with a micro-layer assembly such as the one described in US2010/0227136 to obtain a tube of molten polymeric material which is quenched immediately after extrusion without being expanded, optionally cross-linked, then heated to a temperature which is above the Tg of all the resins employed and below the melting temperature of at least one of the resins employed, typically by passing it through a hot water bath, or alternatively by passing it through an IR oven or a hot air tunnel, and expanded, still at this temperature by internal air pressure to get the transversal orientation and by a differential speed of the pinch rolls which hold the thus obtained "trapped bubble", to provide the longitudinal orientation. Typical orientation ratios will be comprised between about 2 and about 6 in each direction and preferably between about 3 and about 5 in each direction. After having been stretched, the film is quickly cooled while substantially retaining its stretched dimensions to somehow freeze the molecules of the film in their oriented state and rolled for further processing.

Cross-linking is typically obtained by passing the flattened tubing through an irradiation vault where it is irradiated by high-energy electrons. Depending on the characteristics desired, this irradiation dosage can vary from about 20 to about 200 kGy, preferably from about 30 to about 150 kGy.

Depending on the number of layers in the structure it may be advisable or necessary to split the co-extrusion step: a tube will first be formed, with layer (1) on the inside of the tube; this tube will be quenched quickly and before submitting it to the orientation step it will be extrusion-coated with the remaining layers, again quenched quickly, optionally cross-linked, and then passed to the orientation. During extrusion-coating the tube will be slightly inflated just to keep it in the form of a tube and avoid that it collapses.

The coating step can be simultaneous, by coextruding all the remaining layers altogether, so as to simultaneously adhere all of them, one over the other, to the quenched tube obtained in the first coextrusion step, or this coating step can be repeated as many times as the layers which are to be added.

The extrusion-coating step is clearly also required when a film only partially cross-linked is desired. As an example, in the case of barrier structures comprising a PVDC layer that might be degraded / discolored by irradiation, it might be desirable to avoid cross-linking of the PVDC layer. In this case the irradiation step will be performed after the extrusion of the first group of layers, which would not comprise the PVDC barrier layer, and before extrusion coating.

Alternatively, the film according to the present invention may be obtained by flat extrusion (co-extrusion or extrusion coating) through a multiplier such as the one described in WO2010015402 and biaxial stretching by a simultaneous or a sequential tenter process.

Still alternatively the film according to the present invention may be obtained by heat- or glue-laminating separately obtained webs each containing only part of the film sequence of layers.

The film of the present invention may be used as a flat film, and when used as a flat film for e.g. tray-lidding or Form-Fill-Seal applications, preferably however the film of the present invention will be used as a tubing, or a bag to form a package in a conventional manner.

In a preferred embodiment the film is obtained as a seamless tubular film and it can be wound and then used as such to make bags of suitable size at the customer packaging plant or it can be converted into bags at the film manufacturing plant. In particular end sealed (ES) bags are individually formed by transversely sealing and severing across the seamless tubular film as it is laid flat, while side sealed (TS) bags may be made by slitting the seamless tubular film along one of its edges after which it is transversely sealed and severed into bags. The side seals are the sealing and severing seams and the bottom of the bag is the unslit edge of the film. Other bag and pouch making methods known in the art may be readily adapted to make receptacles or containers from the multilayer film according to the present invention.

In packaging, the product will be loaded into a heat-shrinkable bag made of the film of the invention, the bag will normally be evacuated, and the open end thereof will be closed by heat-sealing or by applying a clip, e.g. of metal. This process is advantageously carried out within a vacuum chamber where the evacuation and application of the clip or heat seal is done automatically. After the bag is removed from the chamber it is heat shrunk by applying heat. This can be done, for instance, by immersing the filled bag into a hot water bath or conveying it through a hot water shower or a hot air tunnel, or by infrared radiation. The heat treatment will produce a tight wrapping that will closely conform to the contour of the product therein.

A heat shrinkable bag from a film of the invention has wide applications, particularly for meat, poultry, and some dairy products. The shrink properties of the film will in fact guarantee relatively complete shrinkage of the bag around the product, so that the bag is not wrinkled, thus offering an attractive package. The bag will have mechanical properties that will allow it to physically survive the process of being filled, evacuated, sealed, closed, heat shrunk, boxed, shipped, unloaded, and stored at the retail supermarket, and a sufficient stiffness to improve also its loading process.

The films of the present invention have resulted to be easily processable and obtainable with improved process stability, reproducibility and better tubing appearance. During manufacturing an increase in the orientation ratio of about 10-20% and/or a lowered orientation temperature were observed. These films may show - inter alia - a reduced curling effect and in general balanced and/or improved mechanical, shrink, optical and machinability properties.

The present invention can be further understood by reference to the following examples that are merely illustrative and are not to be interpreted as a limitation to the scope of the present invention that is defined by the appended claims.

In the following examples the resins indicated in Table 1 below have been employed:

**Table 1**

| Type | Tradename | Melt flow rate/index (g/10min) | Density (g/cc) | Vicat softening | Melting point |
|---|---|---|---|---|---|
| EPB1 | Eltex PKS359 | 5.0 (⁹) | 0.895 (¹⁰) | na | 131°C(¹¹) |
| EVA1 | Escorene FL00112 ultra | 0.5 (¹) | 0.936 (⁴) | 175°F (⁸) | 205°F (⁴) |
| EVA2 | Elvax 3165 | 0.7 (¹) | 0.94 (²) | 69°C (⁸) | 89°C (⁶) |
| EVA3 | Evatane 1003VN4 | 0.5 (¹) | 0.935 (²) | | |
| EVA4 | Escorene FL 00014 ultra | 0.25 (¹) | 0.937 (⁴) | 76°C (³) | 92°C (⁴) |
| EVA5 | Escorene FL00212 ultra | 2.50 (¹) | 0.933 (⁴) | 72°C (³) | 93 °C (⁴) |
| EVA6 | Greenflex FF35 | 0.70 (¹) | | 75°C (³) | 102 °C (¹²) |
| EVA7 | Escorene FL00309 | 3.00 (¹) | 0.929 (⁴) | 74°C (³) | 96 °C (⁴) |
| EVA8 | Elvax 3170 | 2.50 (¹) | 0.94 (²) | 65 °C (³) | 87°C (⁶) |
| LLDPE1 | Dowlex 2045S | 1.0 (⁹) | 0.92 (²) | 108 °C (³) | 122°C (⁵) |
| LLDPE2 | Stamylex 1046F | 4.4 (⁹) | 0.919 (¹⁰) | 98 °C (⁷) | 122°C (DSC) |
| LLDPE3 | Attane 4606G | 3.3 (⁹) | 0.911 (²) | 90 °C (⁷) | |
| m-LLDPE1 | Exceed 2018CA | 2 (¹) | 0.918 (⁴) | | 243°F (⁴) |
| m-LLDPE2 | Exact 1007 | 6.6 (⁹) | 0.910 (¹⁰) | 88°C(¹⁴) | 104°C (⁶) |
| m-LLDPE3 | Exceed 1018 CA | 1.0 (¹) | 0.918 (⁴) | | 119°C (⁴) |
| PA1 | Ultramid C33 L01 | | 1.12 (¹⁰) | | 196°C (¹⁵) |
| PVDC1 | Ixan PV910 | | 1.71 | | |
| PVDC2 | Ixan PV 915 | | 1.71 | | 155°C |
| TIE1 | Plexar PX3227 | 1.7 | 0.913 (¹³) | 82 °C(³) | |
| TIE2 | Bynel 3101 | 3.2 (⁹) | 0.943 (²) | 65°C (³) | 87°C (⁶) |
| ULDPE1 | Affinity EG 8100 | 1.0 (¹) | 0.87 (²) | 42.8°C (³) | 55°C (5) |
| VLDPE1 | Attane SL4102 | 1.0 (⁹) | 0.905 (²) | 84°C (³) | 122°C (⁵) |
| VLDPE2 | Affinity PL1880G | 1.0 (¹) | 0.902 (²) | 86.1°C(³) | 98.9°C (⁵) |
| VLDPE3 | Attane 4607G | 4.0 (⁹) | 0.904 (²) | 72°C (⁷) | |
| VLDPE4 | Affinity PL1281G1 | 6.0(¹) | 0.900 (²) | | 99°C (⁵) |
| VLDPE5 | Affinity PL1881G | 1.0 (¹) | 0.904 (²) | 86.1 °C (³) | 100°C (⁵) |

| | | | | | |
|---|---|---|---|---|---|
| Keys: ¹ASTM D-1238 , ²ASTM D-792, ³ASTM D-1525, ⁴Exxon Mobil method, ⁵Dow method, ⁶ASTM D3418, ⁷ISO306A, ⁸ASTM D-1525, ⁹ISO 1133, ¹⁰ISO 1183, ¹¹ASTM 3417, ¹²Polimeri Europa method, ¹³ASTM D 1505, ¹⁴ISO306, ¹⁵ISO 3146 | | | | | |

The examples have been collected in the tables 5 to 9.

### Key for tables 5-9

Core layer (2) composition is expressed as a formula in which resins A and B, their percentage in a blend or alternation in adjacent layers, the presence or not of a terminal layer and the total number of layers (n) in the sequence (a) are reported. The sign + is used for blends, the sign / indicates an alternation of layers. The letter C is used for comparative examples.

In particular the following Table 2 summarizes the formulas (17 examples according to the present invention and 17 comparative structures) that have been detailed in Tables 5 to 9:

**Table 2**

| Table | Sequence (a) | n | Number of layers in sequence (a) | Examples | Resin A | Resin B |
|---|---|---|---|---|---|---|
| 5.1 | (A+B)n | n=1 | 1 | C1 C2 | LLDPE1 | VLDPE1 |
| 5.1 | (A+B)n | n=49 | 49 | 1 2 | LLDPE1 | VLDPE1 |
| 5.1 | (A/B)n | n=1 | 2 | C3 | LLDPE1 | VLDPE1 |
| 5.1 | (A/B)n/A | n=24 | 49 | 3 | LLDPE1 | VLDPE1 |
| 6.1 | (A+B)n | n=1 | 1 | C4 | VLDPE1 | m-LLDPE1 |
| 6.1 | (A+B)n | n=49 | 49 | 4 | VLDPE1 | m-LLDPE1 |
| 6.1 | (A/B)n | n=1 | 2 | C5 C6 | VLDPE1 | m-LLDPE1 |
| 6.1 | (A/B)n/A | n=24 | 49 | 5 6 | VLDPE1 | m-LLDPE1 |
| 7.1 | [A/(A+B)]n | n=1 | 2 | C7 C8 | EVA2 | EPB1 |
| 7.1 | [A/(A+B)]n/A | n=24 | 49 | 7 8 | EVA2 | EPB1 |
| 7.1 | (A/B)n | n=1 | 2 | C9 | EVA2 | EPB1 |
| 7.1 | (A/B)n/A | n=24 | 49 | 9 | EVA2 | EPB1 |
| 8.1 | (A+B)n | n=1 | 1 | C10 C11 | ULDPE1 | LLDPE3 |
| 8.1 | (A+B)n | n=49 | 49 | 10 11 | ULDPE1 | LLDPE3 |
| 8.1 | [A/(A+B)]n | n=1 | 2 | C12 | ULDPE1 | LLDPE3 |
| 8.1 | [A/(A+B)]n/A | n=24 | 49 | 12 | ULDPE1 | LLDPE3 |
| 9.1 | (A+B)n | n=1 | 1 | C13 C15 C16 | EVA1 | VLDPE1 |
| 9.1 | (A+B)n | n=49 | 49 | 13 | EVA1 | VLDPE1 |
| 9.1 | (A/B)n | n=1 | 2 | C14 C17 | EVA1 | VLDPE1 |
| 9.1 | (A/B)n/A | n=24 | 49 | 14 17 | EVA1 | VLDPE1 |
| 9.1 | [(A+B)/B]n/(A+B) | n=24 | 49 | 15 | EVA1 | VLDPE1 |
| 9.1 | [(A+B)/B]n/(A+B) | n=12 | 25 | 16 | EVA1 | VLDPE1 |

The test methods used for properties evaluations are summarized in the following Table 3:

**Table 3**

| Attribute | Test method |
|---|---|
| Free shrink | ASTM D2732 |
| Puncture at 23 °C | Internal method see description below |
| Puncture at 90 °C | Internal method see description below |
| In-line abuse | Internal method see description below |
| Elastic modulus at 23°C | ASTM D882 |
| Tensile Strength and Elongation at break | ASTM D 882 |
| Haze after shrink | ASTM D1003 (on shrunk sample) |
| Tear Propagation | ASTM D1938 |

Free Shrink: it is the percent dimensional change in a 10 cm x 10 cm specimen of film when subjected to a selected heat; it has been measured following ASTM Standard Test Method D 2732, immersing the specimen for 5 seconds in a heated water bath at 85°C.

Puncture at 23°C: the puncture resistance is the resistance force arising when pushing a punch against a surface of flexible film. A film sample is fixed in a specimen holder connected to a compression cell mounted on a dynamometer (an Instron tensile tester); when the dynamometer is started, a punch (a punching sphere, 5-mm in diameter, soldered on a plunger) is brought against the film sample at a constant speed (30 cm/min) and the force needed to puncture the sample is graphically recorded.

Puncture at 90°C: As above but setting the temperature of the punch at 90 °C and the dynamometer speed at 35 cm/min.

In-line abuse resistance was measured according to an internal test method. The "in-line abuse resistance" is the capability of a structure to withstand without breakage the packaging operations, i. e. loading, vacuumising, sealing, shrinking, and collecting the products through an idle roll conveyor. This is an assessment of the resistance of a material to the mechanical abuse during a packaging operation on a well defined packaging line. The packaging line is standardized (both the components and the layout) so that the results obtained on different samples can be compared. Objective of this test is to provide a method to discriminate and rank bags of different structure at a laboratory level as to their mechanical properties. The procedure to test this property is therefore devised so as to simulate as much as possible the most drastic conditions that might actually occur in the packaging lines. To perform this test, the bags to be examined are filled with metal blocks of constant weight (630 g), vacuumized (residual vacuum below 10 mbar), sealed at the conditions that the skilled in the art is able to set for the specific material under test and shrunk at 85°C in hot water in a dip tank. The thus obtained packages are then checked for leakers (due to mechanical abrasion and film puncturing) and the in-line abuse resistance is evaluated by the percentage of rejects. This test has a relative meaning and its aim is to indicate whether a given structure is expected to have, at the customer plant, more or less abuse resistance than a standard bag used for comparison.

Elastic modulus at 23°C: it has been evaluated by ASTM D 882.

Tensile Strength and Elongation at break (ASTM D 882).

Tensile strength represents the maximum tensile load per unit area of the original cross-section of the test specimen required to break it, expressed as kg/cm².

Elongation at break represents the increase in length of the specimen, measured at the moment of rupture expressed as percent of the original length.

Measurements were performed with Instron tensile tester equipped with a load cell type CM (1-50 kg), in an environmental chamber set at 23°C, on specimens previously stored at 23°C and 50% RH for minimum of 24 hours. Tensile and elongation measurements were recorded simultaneously and the reported results are the average values.

Haze after shrink: an internal method was used for this test. The sample preparation followed ASTM D2732, then ASTM D1003 was followed for the haze measurement. At least 3 test specimens for each material were trimmed to a size 15 cm x 15 cm, placed in a pair of metal tongs and subjected to shrink process in hot water at 85°C for 5 seconds and then cooled down in a cold water bath for 5 seconds. The specimen were then let dry, mounted in the sample holder and haze was measured following ASTM D1003.

Tear Propagation (ASTM -D1938): This test method covers the determination of the force necessary to propagate a tear in plastic films and thin sheeting at 23°C. The specimens are cut both in the machine direction and in transverse direction and shall consist of strips 75 mm long by 25,4 mm wide and shall have a clean longitudinal slit 50 mm long. The two tongues of the specimens are secured to the two jaws of the testing machine (dynamometer), one of the two jaws being fixed and the other being allowed moving in the opposite direction. The load necessary to propagate the tear through the entire unslit 25 mm portion is then recorded and the average value of tear strength curve is calculated in g. The tear propagation values of the films of the present invention were also reported as percentage increase in comparison to the comparative examples.

The results achieved in the above tests have been qualitatively summarized according to the following keys:

**Table 4**

| | |
|---|---|
| + | Comparable to not multiplied |
| ++ | Better than not multiplied |
| +++ | Much better than not multiplied |

The multilayer films according to the present invention (Examples 1-17) and comparative films (Examples C1-C17) have been prepared by coextrusion through a round die as described in US2010/0227136 of a substrate consisting of a first outer heat sealable layer (1), a core layer (2), and optionally a tie layer (3), followed by quenching of the extruded multilayer tubular film, irradiation and extrusion coating thereof with a barrier layer (4), a second optional tie layer (5) and an outer abuse layer (6). The obtained tube is then rapidly cooled and biaxially oriented by passing it through a hot water bath, then inflating to get transverse orientation and stretching to get longitudinal orientation. The orientation ratios were from about 3.6 to about 4.4.

The following tables 5 to 9 below show the resins used for the different layers and their arrangement, the total/core thickness and the properties of the present films compared to conventional structures.

### Table 5: resin A: LLDPE1 / resin B: VLDPE1

**Table 5.1**

| Ex. | 1 | 2 | 3 | 4 | 5 | 6 |
|---|---|---|---|---|---|---|
| (Tot µm) | Sealant | Core Composition, total number of layers, thickness (µm) | Tie | Barrier | Tie | Outer |
| C1 (90) | 80% VLDPE4 + 20% m-LLDPE3 | 65% LLDPE1 + 35% VLDPE1 (1) (44) | EVA4 | PVDC1 | 70%TIE2 + 30%VLDPE1 | 80% VLDPE5 + 20% LLDPE1 |
| 1 (90) | 80% VLDPE4 + 20% m-LLDPE3 | (65% LLDPE1 + 35% VLDPE1)₄₉ (49) (44) | EVA4 | PVDC1 | 70%TIE2 + 30%VLDPE1 | 80% VLDPE5 + 20% LLDPE1 |
| C2 (80) | 80% VLDPE4 + 20% m-LLDPE3 | 65% LLDPE1 + 35% VLDPE1 (1) (39) | EVA4 | PVDC1 | 70%TIE2 + 30%VLDPE1 | 80% VLDPE5 + 20% LLDPE1 |
| 2 (80) | 80% VLDPE4 + 20% m-LLDPE3 | (65% LLDPE1 + 35% VLDPE1)₄₉ (49) (39) | EVA4 | PVDC1 | 70%TIE2 + 30%VLDPE1 | 80% VLDPE5 + 20% LLDPE1 |
| C3 (80) | 80% VLDPE4 + 20% m-LLDPE3 | LLDPE1/ VLDPE1 (2) (39) | EVA4 | PVDC1 | 70%TIE2 + 30%VLDPE1 | 80% VLDPE5 + 20% LLDPE1 |
| 3 (80) | 80% VLDPE4 + 20% m-LLDPE3 | (LLDPE1/ VLDPE1)₂₄ /LLDPE1 (49) (39) | EVA4 | PVDC1 | 70%TIE2 + 30%VLDPE1 | 80% VLDPE5 + 20% LLDPE1 |

**Table 5.2**

| Ex n | Shrink (85°C) LD/TD (%) | | Puncture 23°C (gf) | Puncture 90°C (gf) | In line abuse at 630g (%) | Elastic modulus LD/TD (kg/cm²) | Tensile LD/TD (kg/cm²) | Elongation LD/TD (%) | Haze after shrink (%) |
|---|---|---|---|---|---|---|---|---|---|
| C1 | 22 | 30 | 12655 | 1920 | 61% | 1815/1990 | 875/780 | 300/240 | 18 |
| 1 | 25 | 31 | 13225 | 1978 | 37% | 2255/2180 | 850/810 | 280/290 | 17 |
| C2 | 19 | 31 | 12675 | 1963 | 35% | 1950/2050 | 815/960 | 270/210 | 17 |
| 2 | 26 | 35 | 14212 | 1937 | 24% | 2340/2200 | 870/940 | 280/220 | 16 |
| C3 | 25 | 35 | 10350 | 1819 | 43% | 1750/1980 | 840/860 | 270/190 | 19 |
| 3 | 25 | 35 | 13247 | 1858 | 57% | 2550/2310 | 810/730 | 260/215 | 17 |

**Table 5.3**

| | tear propagation | | | |
|---|---|---|---|---|
| Example | LD (gf) | LD increase (%) | TD (gf) | TD increase (%) |
| C3 | 63 | - | 52 | - |
| 3 | 220 | 249 | 72 | 38 |

**Table 5.4**

| Not multiplied reference structure | C1 | |
|---|---|---|
| Total n. of layers in the core layer | 49 | |
| Resins Type | LLDPE/VLDPE | |
| Core: layer sequence | A+B/A+B/....../A+B | A/B/......../A |
| Example | 1,2 | 3 |
| Puncture at 23°C | +++ | +++ |
| Puncture at 90°C | + | + |
| Elastic modulus | +++ | +++ |
| In-Line abuse | + | + |
| Free Shrink at 85°C | ++ | + |

From the tables 5.2 to 5.4 above it appears that the films according to the present invention show improved puncture resistance at 23°C, elastic modulus, tear propagation and free shrink.

### Table 6: resin A: VLDPE2 / resin B: m-LLDPE

**Table 6.1**

| Ex. (Tot µm) | 1 Sealant | 2 Core Composition, total number of layers, thickness (µm) | 3 Tie | 4 Barrier | 5 Tie | 6 Outer |
|---|---|---|---|---|---|---|
| C4 (58) | 80%VLDPE4 + 20% m-LLDPE2 | 80% VLDPE2 + 20% m-LLDPE1 (1) (24) | EVA3 | PVDC1 | 80% TIE1 + 20% TIE2 | PA1 |
| 4 (58) | 80%VLDPE4 + 20% m-LLDPE2 | (80% VLDPE2 + 20% m-LLDPE1)₄₉ (49) (24) | EVA3 | PVDC1 | 80% TIE1 + 20% TIE2 | PA1 |
| C5 (58) | 80%VLDPE4 + 20% m-LLDPE2 | VLDPE2/ m-LLDPE1 (2) (24) | EVA3 | PVDC1 | 80% TIE1 + 20% TIE2 | PA1 |
| 5 (58) | 80%VLDPE4 + 20% m-LLDPE2 | (VLDPE2 / m-LLDPE1)₂₄/ VLDPE2 (49) (24) | EVA3 | PVDC1 | 80% TIE1 + 20% TIE2 | PA1 |
| C6 (53) | 80%VLDPE4 + 20% m-LLDPE2 | VLDPE2 / m-LLDPE1 (2) (22) | EVA3 | PVDC1 | 80% TIE1 + 20% TIE2 | PA1 |
| 6 (53) | 80%VLDPE4 + 20% m-LLDPE2 | (VLDPE2 / m-LLDPE1)₂₄/ VLDPE2 (49) (22) | EVA3 | PVDC1 | 80% TIE1 + 20% TIE2 | PA1 |

**Table 6.2**

| Ex | Shrink 85°C LD/TD (%) | Puncture at 23°C (gf) | Puncture at 90°C (gf) | In line abuse at 630 g (%) | Elastic modulus LD/TD (kg/cm²) | Tensile LD/TD (kg/cm²) | Elongation LD/TD (%) | Haze after shrink (%) |
|---|---|---|---|---|---|---|---|---|
| C4 | 32/41 | 8750 | 1186 | 70% | 2790/2910 | 690/490 | 140/130 | 13 |
| 4 | 36/43 | 9760 | 1182 | 46% | 2820/2970 | 780/540 | 180/150 | 35 |
| C5 | 29/40 | 7580 | 1271 | 59% | 2600/2670 | 490/470 | 140/120 | 15 |
| 5 | 36/42 | 9920 | 1152 | 37% | 2670/2660 | 700/540 | 190/150 | 27 |
| C6 | 34/44 | 9310 | 1111 | 50% | 2630/2530 | 760/570 | 170/130 | 16 |
| 6 | 37/45 | 9840 | 1017 | 54% | 2560/2540 | 750/550 | 170/140 | 26 |

**Table 6.3**

| Not multiplied reference structure | C4 | |
|---|---|---|
| Total n. of layers in the core layer | 49 | |
| Resins Type | VLDPE/m-LLDPE | |
| Core: layer sequence | A+B/A+B/....../A+B | A/B/......../A |
| Example | 4 | 5, 6 |
| Puncture at 23°C | ++ | +++ |
| Puncture at 90°C | + | + |
| Elastic modulus | + | + |
| In-Line abuse | +++ | +++ |
| Free Shrink at 85°C | ++ | ++ |

From the tables above it appears that the films according to the present invention show improved puncture resistance at 23°C, in-line abuse and free shrink.

Table 7: resin A: EVA2 / resin B: EPB1

**Table 7.1**

| Ex (Tot µm) | 1 Sealant | 2 Core Composition, total number of layers, thickness (µm) | 3 Tie | 4 Barrier | 5 Tie | 6 Outer |
|---|---|---|---|---|---|---|
| C7 (52) | 80% VLDPE4 + 20% m-LLDPE2 | EVA2 / (70% EPB1 + 30% EVA2) (2) (16) | EVA2 | PVDC2 | EVA2 | 70% EVA1 + 30% m-LLDPE2 |
| 7 (52) | 80% VLDPE4 + 20% m-LLDPE2 | [EVA2 / (70% EPB1 + 30% EVA2)]₂₄ / EVA2 (49) (16) | EVA2 | PVDC2 | EVA2 | 70% EVA1 + 30% m-LLDPE2 |
| C8 (49) | 80% VLDPE4 + 20% m-LLDPE2 | EVA2 / (70% EPB1 + 30% EVA2) (2) (15) | EVA2 | PVDC2 | EVA2 | 70% EVA1 + 30% m-LLDPE2 |
| 8 (49) | 80% VLDPE4 + 20% m-LLDPE2 | [EVA2 / (70% EPB1 + 30% EVA2)]₂₄ / EVA2 (49) (15) | EVA2 | PVDC2 | EVA2 | 70% EVA1 + 30% m-LLDPE2 |
| C9 (52) | 80% VLDPE4 + 20% m-LLDPE2 | EVA2 / EPB1 (2) (16) | EVA2 | PVDC2 | EVA2 | 70% EVA1 + 30% m-LLDPE2 |
| 9 (52) | 80% VLDPE4 + 20% m-LLDPE2 + 20% m-LLDPE2 | (EVA2 / EPB1)₂₄/ EVA2 (49) (16) EVA2 (49) (16) | EVA2 | PVDC2 | EVA2 | 70% EVA1 + 30% m-LLDPE2 30% m-LLDPE2 |

**Table 7.2**

| Ex n | Shrink (85 °C) LD/TD (%) | | Puncture 23°C (gf) | Puncture 90°C (gf) | In line abuse at 630g (%) | Elastic modulus LD/TD (kg/cm²) | Tensile LD/TD (kg/cm²) | Elongation LD/TD (%) | Haze after shrink (%) |
|---|---|---|---|---|---|---|---|---|---|
| C7 | 31 | 43 | 5050 | 779 | 59% | 2680/2690 | 820/720 | 180/220 | 41 |
| 7 | 31 | 43 | 7213 | 783 | 41% | 2740/2640 | 820/670 | 180/200 | 53 |
| C8 | 29 | 41 | 5040 | 718 | 35% | 2660/2700 | 750/720 | 200/200 | 46 |
| 8 | 32 | 42 | 6885 | 804 | 43% | 2760/2630 | 800/730 | 190/190 | 47 |
| C9 | 31 | 39 | 5760 | 948 | 24% | 3330/3480 | 840/840 | 210/230 | 28 |
| 9 | 33 | 38 | 7302 | 922 | 37% | 3210/3390 | 850/680 | 230/230 | 54 |

**Table 7.3**

| | tear propagation | | | |
|---|---|---|---|---|
| Example | LD (gf) | LD increase (%) | TD (gf) | TD increase (%) |
| C7 | 15 | - | 32 | - |
| 7 | 15 | 0 | 47 | 47 |

**Table 7.4**

| Not multiplied reference structure | C7 | |
|---|---|---|
| Total n. of layers in the core layer | 49 | |
| Resins Type | EPB/EVA | |
| Core: layer sequence | A/A+B/....../A | A/B/......../A |
| Example | 7, 8 | 9 |
| Puncture at 23°C | +++ | +++ |
| Puncture at 90°C | + | + |
| Elastic modulus | + | + |
| In-Line abuse | + | + |
| Free Shrink at 85°C | + | + |

From the tables 7.2 to 7.4 above it appears that the films according to the present invention show improved puncture resistance at 23°C and tear properties.

### Table 8: resin A: ULDPE1 / resin B: LLDPE3

**Table 8.1**

| Ex | 1 | 2 Core | 3 | 4 | 5 | 6 Outer |
|---|---|---|---|---|---|---|
| (Tot µm) | Sealant | Composition, total number of layers, thickness (µm) | Tie | Barrier | Tie | |
| C10 (45) | 80%VLDPE4 + 20% m-LLDPE2 | 50%ULDPE1 + 50%LLDPE3 (1) (13) | EVA3 | PVDC1 | EVA3 | VLDPE2 |
| 10 (45) | 80%VLDPE4 + 20% m-LLDPE2 | (50%ULDPE1 + 50%LLDPE3) ₄₉ (49) (13) | EVA3 | PVDC1 | EVA3 | VLDPE2 |
| C11 (40) | 80%VLDPE4 + 20% m-LLDPE2 | 50%ULDPE1 + 50%LLDPE3 (1) (12) | EVA3 | PVDC1 | EVA3 | VLDPE2 |
| 11 (40) | 80%VLDPE4 + 20% m-LLDPE2 | (50%ULDPE1 + 50%LLDPE3) ₄₉ (49) (12) | EVA3 | PVDC1 | EVA3 | VLDPE2 |
| C12 (40) | 80%VLDPE4 + 20% m-LLDPE2 | LLDPE3 / (50%ULDPE1 + 50%LLDPE3) (2) (10) | EVA3 | PVDC1 | EVA3 | VLDPE2 |
| 12 (40) | 80%VLDPE4 + 20% m-LLDPE2 | [LLDPE3 / (50%ULDPE1 + 50%LLDPE3)]₂₄ / LLDPE3 (49) (10) | EVA3 | PVDC1 | EVA3 | VLDPE2 |

**Table 8.2**

| Ex n | Shrink (85°C) LD/TD (%) | | Puncture 23°C (gf) | Puncture 90°C (gf) | In line abuse at 630 g (%) | Elastic modulus LD/TD (kg/cm²) | Tensile LD/TD (kg/cm²) | Elongation LD/TD (%) | Haze after shrink (%) |
|---|---|---|---|---|---|---|---|---|---|
| C10 | 40 | 46 | 5130 | 512 | 56% | 2820/2460 | 650/620 | 100/160 | 15 |
| 10 | 37 | 44 | 5400 | 416 | 50% | 2510/2300 | 780/740 | 170/200 | 15 |
| C11 | 35 | 44 | 5200 | 400 | N.A. | 2490/2300 | 640/750 | 110/150 | 18 |
| 11 | 44 | 49 | 6680 | 303 | 81% | 2970/2640 | 660/840 | 130/150 | 11 |
| C12 | 30 | 36 | 4250 | n.a | N.A. | 2360/2350 | 780/760 | 160/190 | 32 |
| 12 | 41 | 47 | 6330 | 380 | 67% | 2770/2570 | 630/800 | 120/140 | 10 |

**Table 8.3**

| Not multiplied reference structure | C10 | |
|---|---|---|
| Total n. of layers in the core layer | 49 | |
| Resins Type | ULDPE/LLDPE | |
| Core: layer sequence | A+B/A+B/....../A+B | A/A+B/....../A |
| Example | 11 | 12 |
| Puncture at 23°C | +++ | +++ |
| Puncture at 90°C | + | + |
| Elastic modulus | ++ | +++ |
| In-Line abuse | + | + |
| Free Shrink at 85°C | ++ | +++ |

From the tables above it appears that the films according to the present invention show improved puncture resistance at 23°C, elastic modulus and free shrink at 85°C.

### Table 9: resin A: EVA1 / resin B: VLDPE1

**Table 9.1**

| Ex | 1 | 2 Core | 3 | 4 | 5 | 6 |
|---|---|---|---|---|---|---|
| (Tot µm) | Sealant | Composition, total n of layers, thickness (µm) | Tie | Barrier | Tie | Outer |
| C13 (50) | 80% VLDPE4 + 20% m-LLDPE2 | 70%EVA1 + 30% VLDPE1 (1) (20) | 70%EVA1 + 30% VLDPE1 | PVDC1 | No | 70%EVA1 + 30% m-LLDPE2 |
| 13 (50) | 80% VLDPE4 + 20% m-LLDPE2 | (70%EVA1 + 30% VLDPE1)₄₉ (49) (20) | 70%EVA1 + 30% VLDPE1 | PVDC1 | No | 70%EVA1 + 30% m-LLDPE2 |
| C14 (50) | 80% VLDPE4 + 20% m-LLDPE2 | EVA1 / VLDPE1 (2) (20) | 70%EVA1 + 30% VLDPE1 | PVDC1 | No | 70%EVA1 + 30% m-LLDPE2 |
| 14 (50) | 80% VLDPE4 + 20% m-LLDPE2 | (EVA1 / VLDPE1)₂₄/ EVA1 (49) (20) | 70%EVA1 + 30% VLDPE1 | PVDC1 | No | 70%EVA1 + 30% m-LLDPE2 |
| C15 (42) | 80% VLDPE4 + 20% m-LLDPE2 | 70%EVA1/ 30% VLDPE1 (1)(18) | 70%EVA1 + 30% VLDPE1 | PVDC1 | No | 70%EVA1 + 30% m-LLDPE2 |
| 15 (42) | 80% VLDPE4 + 20% m-LLDPE2 | (85% EVA1 + 15% VLDPE1/VLDPE1)₂₄ / (85% EVA1 + 15% VLDPE1) (49) (18) | No | PVDC1 | No | 70%EVA1 + 30% m-LLDPE2 |
| C16 (40) | 80% VLDPE4 + 20% m-LLDPE2 | 70%EVA1 + 30% VLDPE1 (1)(17) | 70%EVA1 + 30% VLDPE1 | PVDC1 | No | 70%EVA1 + 30% m-LLDPE2 |
| 16 (40) | 80% VLDPE4 + 20% m-LLDPE2 | [(85% EVA1 + 15% VLDPE1)/ VLDPE1]₁₂ / (85% EVA1 + 15% VLDPE1) (25)(17) | no | PVDC1 | No | 70%EVA1 + 30% m-LLDPE2 |
| C17 (42) | 80% VLDPE4 + 20% m-LLDPE2 | EVA1/VLDPE1 (2) (15) | 70%EVA1 + 30% VLDPE1 | PVDC1 | No | 70%EVA1 + 30% m-LLDPE2 |
| 17 (42) | 80% VLDPE4 + 20% m-LLDPE2 | (EVA1/ VLDPE1)₂₄ / EVA1 (49) (15) | 70%EVA1 + 30% VLDPE1 | PVDC1 | No | 70%EVA1 + 30% m-LLDPE2 |

**Table 9.2**

| Ex n | Shrink (85 ° C) LD/TD (%) | | Puncture 23°C (gf) | Puncture 90°C (gf) | In line abuse at 630g (%) | Elastic modulus LD/TD (kg/cm²) | Tensile LD/TD (kg/cm²) | Elongation LD/TD (%) | Haze after shrink (%) |
|---|---|---|---|---|---|---|---|---|---|
| C13 | 26 | 36 | 7355 | 690 | 41% | 2140/2080 | 780/710 | 150/220 | 15 |
| 13 | 35 | 41 | 7596 | 717 | N.A. | 2630/2830 | 920/920 | 160/170 | 15 |
| C14 | 35 | 42 | 6420 | 666 | 44% | 1630/1860 | 800/800 | 170/220 | 19 |
| 14 | 34 | 41 | 8500 | 771 | 43% | 2400/2300 | 780/805 | 170/190 | 16 |
| C15 | 34 | 42 | 5640 | 598 | 59% | 1620/1960 | 750/725 | 150/185 | 15 |
| 15 | 36 | 46 | 7260 | 451 | 80% | 3210/3040 | 830/870 | 150/180 | 24.2 |
| C16 | 20 | 34 | 6413 | 686 | 80% | 2680/2830 | 762/804 | 120/200 | 12 |
| 16 | 25 | 40 | 6119 | 564 | 65% | 2660/2520 | 756/663 | 160/180 | 11 |
| C17 | 25 | 39 | 6090 | 588 | 52% | 1790/1730 | 795/740 | 155/200 | 13 |
| 17 | 32 | 39 | 7696 | 698 | 61% | 2490/2460 | 785/740 | 150/190 | 13 |

**Table 9.3**

| | tear propagation | | | |
|---|---|---|---|---|
| Example | LD (gf) | LD increase (%) | TD (gf) | TD increase (%) |
| C14 | 19 | - | 92 | - |
| 14 | 19 | 0 | 212 | 130 |
| C16 | 9 | - | 12 | - |
| 16 | 10 | 11 | 19 | 58 |

**Table 9.4**

| Not multiplied reference structure | C13/C16 | | | |
|---|---|---|---|---|
| Total n. of layers in the core layer | 49 | | 25 | |
| Resins Type | EVA/VLDPE | | EVA/VLDPE | |
| | | | | |
| Core: layer sequence | A+B/A+B/...... /A+B | A/B/...... ../A | A+B/B/...... A+B | A+B/B/...... A+B |
| Example | 13 | 14 | 15 | 16 |
| Puncture at 23°C | ++ | +++ | +++ | + |
| Puncture at 90°C | ++ | ++ | + | + |
| Elastic modulus | +++ | +++ | +++ | + |
| In-Line abuse | + | + | + | ++ |
| Free Shrink at85°C | +++ | + | ++ | +++ |

From the tables above it appears that the films according to the present invention show improved puncture resistance at 23°C, elastic modulus, free shrink at 85°C, in-Line abuse and tear propagation.

In conclusion, the films according to the present invention show an overall mechanical properties improvement (puncture at 23°C, elastic modulus, in-Line abuse and tear propagation), a free shrink (at 85°C) improvement regardless the resins involved and their sequence.

Additionally, during manufacturing an improvement in the process stability, in particular an easier bubble inflation, a better bubble stability (less bubble burst) and in particular a lowering in the orientation temperatures and/or an increase in the maximum draw ratio achievable were observed, as demonstrated through orientation conditions reported in Table 10. The extruded materials collected at the exit of the die and cooled down were heated in a water bath and then oriented. A lowering of the water bath temperature and higher orientation ratios were obtained for the films of the present invention allowing better mechanical properties and higher shrink.

**Table 10**

| Examples | Bath Temperature (°C) | orientation ratio LD - TD |
|---|---|---|
| C4 | 94 | 3.6 - 3.4 |
| Ex. 4 | 91 | 3.8 - 3.6 |
| C1 | 98 | 3.8 - 3.2 |
| Ex. 1 | 96 | 4 - 3.7 |
| C13 | 89 | 3.8 - 3.65 |
| Ex. 13 | 88 | 4-4.1 |
| C7 | 94 | 4.3 - 3.65 |
| Ex. 7 | 88 | 4.3 - 4 |

Additionally the present films may show a reduction in curling effect which, in turn, results in a better film machinability both at converting and customer level.

## Claims

1. A multilayer gas-barrier heat shrinkable film comprising: - an outer heat sealable layer (1), a core layer (2), a gas-barrier layer (4) interposed between the core layer (2) and the outer layer (6) and an outer layer (6), **characterized in that** the core layer (2) comprises a sequence of micro-layers (a), said sequence comprising at least a resin A selected among LLDPE, EVA, VLDPE, and ULDPE and a resin B selected among VLDPE, LDPE, m-LLDPE, EPB and LLDPE, wherein
said sequence of micro-layers (a) comprises from 10 to 100 micro-layers, the total thickness of the film is from 20 to 60 µm and the core layer thickness is from 10 to 50 µm.

2. The film of claim 1 wherein said sequence of micro-layers (a) comprises from 25 to 50 micro-layers.

3. The film of claims 1 or 2 wherein said sequence (a) comprises at least a pair of resins A and B selected among the pairs LLDPE / VLDPE, EVA / LDPE, VLDPE / m-LLDPE, EVA / EPB and ULDPE / LLDPE.

4. The film of claim 3 wherein said sequence (a) consists of a pair of resins A and B selected among the pairs LLDPE / VLDPE, EVA / LDPE, VLDPE / m-LLDPE, EVA / EPB and ULDPE / LLDPE.

5. The films of claims 1 to 4 in which said resins A and B are blended (A+B), alternated (A/B) or both blended and alternated within the sequence (a).

6. The film of claims 1 to 5 wherein the micro-layer arrangement and composition in the sequence (a) is selected among (A+B)n, (A/B)n, (A/B)n/A, [A/(A+B)]n, [A/(A+B)]n/A and [(A+B)/B]n/(A+B), where n is an integer number.

7. The film of claims 1 to 6 in which the weight ratio between resin A and resin B in the core layer is from 9:1 to 1:9, preferably from 7:3 to 3:7.

8. The film of claims 1 to 7 wherein the core layer thickness is from from 15 to 40 µm.

9. The film of claims 1 to 8 wherein the heat sealable layer (1) comprises one or more resins independently selected from the group consisting of polyethylene homo-polymer, heterogeneous or homogeneous ethylene- alpha -olefin copolymer, ethylene-vinyl acetate co-polymer, ethylene-ethyl acrylate co-polymer, ethylene-butyl acrylate co-polymer, ethylene-methyl acrylate co-polymer, ethylene-acrylic acid co-polymer, ethylene-methacrylic acid co-polymer, ionomer and blends thereof.

10. The film of claims 1 to 9 wherein the barrier layer (4) comprises at least one gas barrier resin selected from vinylidene chloride copolymers (PVDC), ethylene-vinyl alcohol copolymers (EVOH), polyamides and acrylonitrile-based copolymers, preferably among PVDC, EVOH, polyamides/copolyamides and blends of EVOH with polyamides/copolyamides, most preferably said gas barrier resin is PVDC.

11. The film of claims 1 to 10 further comprising at least one tie layer.

12. The film of claims 1 to 11 having a % free shrink in each direction of at least 5 % preferably at least 10 %, more preferably at least 15% even more preferably at least 20% at 85°C (ASTMD2732).

13. A flexible container for packaging obtainable by self-sealing the film according to claims 1 to 12.

14. The flexible container of claim 13 in the form of a bag, a pouch or a tubing.

15. A package comprising a container according to claims 13 to 14 and a product packaged in said container.

16. Use of a film according to claims 1 to 12 for packaging, preferably for food packaging.

## Patentansprüche

1. Mehrlagige, wärmeschrumpfbare Gassperrfolie, umfassend: - eine äußere, heißsiegelbare Schicht (1), eine Kernschicht (2), eine Gassperrschicht (4), welche zwischen der Kernschicht (2) und der äußeren Schicht (6) eingefügt ist, und eine äußere Schicht (6), **dadurch gekennzeichnet, dass** die Kernschicht (2) eine Folge von Mikroschichten (a) umfasst, wobei die Folge wenigstens ein Harz A, welches aus LLDPE, EVA, VLDPE und ULDPE ausgewählt ist, und ein Harz B umfasst, welches aus VLDPE, LDPE, m-LLDPE, EPB und LLDPE ausgewählt ist, wobei die Folge von Mikroschichten (a) 10 bis 100 Mikroschichten umfasst, die Gesamtdicke der Folie 20 bis 60 µm beträgt und die Kernschichtdicke 10 bis 50 µm beträgt.

2. Folie nach Anspruch 1, wobei die Folge von Mikroschichten (a) 25 bis 50 Mikroschichten umfasst.

3. Folie nach Anspruch 1 oder 2, wobei die Folge (a) wenigstens ein Paar der Harze A und B umfasst, welches aus den Paaren LLDPE / VLDPE, EVA / LDPE, VLDPE / m-LLDPE, EVA / EPB und ULDPE / LLDPE ausgewählt ist.

4. Folie nach Anspruch 3, wobei die Folge (a) aus einem Paar der Harze A und B besteht, welches aus den Paaren LLDPE / VLDPE, EVA / LDPE, VLDPE / m-LLDPE, EVA / EPB und ULDPE / LLDPE ausgewählt ist.

5. Folien nach den Ansprüchen 1 bis 4, bei welchen die Harze A und B innerhalb der Folge (a) vermischt sind (A+B), sich abwechseln (A/B) oder sowohl vermischt sind als auch sich abwechseln.

6. Folie nach den Ansprüchen 1 bis 5, wobei die Mikroschichtanordnung und - zusammensetzung in der Folge (a) aus (A+B)n, (A/B)n, (A/B)n/A, [A/(A+B)]n, [A/(A+B)]n/A und [(A+B)/B]n/(A+B) ausgewählt ist, wobei n eine ganze Zahl ist.

7. Folie nach den Ansprüchen 1 bis 6, bei welcher das Gewichtsverhältnis zwischen dem Harz A und dem Harz B in der Kernschicht 9:1 bis 1:9, vorzugsweise 7:3 bis 3:7, beträgt.

8. Folie nach den Ansprüchen 1 bis 7, wobei die Kernschichtdicke 15 bis 40 µm beträgt.

9. Folie nach den Ansprüchen 1 bis 8, wobei die heißsiegelbare Schicht (1) ein oder mehrere Harze umfasst, welche unabhängig aus der Gruppe, bestehend aus Polyethylen-Homopolymer, heterogenem oder homogenem Ethylen-Alpha-Olefin-Copolymer, Ethylen-Vinylacetat-Copolymer, Ethylen-Ethylacrylat-Copolymer, Ethylen-Butylacrylat-Copolymer, Ethylen-Methylacrylat-Copolymer, Ethylen-Acrylsäure-Copolymer, Ethylen-Methacrylsäure-Copolymer, lonomer und Mischungen davon, ausgewählt sind.

10. Folie nach den Ansprüchen 1 bis 9, wobei die Sperrschicht (4) wenigstens ein Gassperrharz umfasst, welches aus Vinylidenchlorid-Copolymeren (PVDC), Ethylen-Vinylalkohol-Copolymeren (EVOH), Polyamiden und Copolymeren auf Acrylnitrilbasis, vorzugsweise aus PVDC, EVOH, Polyamiden/Copolyamiden und Mischungen von EVOH mit Polyamiden/Copolyamiden, ausgewählt ist, wobei noch bevorzugter das Gassperrharz PVDC ist.

11. Folie nach den Ansprüchen 1 bis 10, ferner umfassend wenigstens eine Bindeschicht.

12. Folie nach den Ansprüchen 1 bis 11, welche eine prozentuale freie Schrumpfung in jeder Richtung von wenigstens 5%, vorzugsweise wenigstens 10%, bevorzugter wenigstens 15 %,noch bevorzugter wenigstens 20 %, bei 85 °C (ASTMD2732) aufweist.

13. Flexibler Behälter zum Verpacken, welcher durch ein Selbstversiegeln der Folie nach den Ansprüchen 1 bis 12 herstellbar ist.

14. Flexibler Behälter nach Anspruch 13 in der Form einer Tasche, eines Beutels oder eines Schlauchs.

15. Verpackung, umfassend einen Behälter nach den Ansprüchen 13 bis 14 und ein in dem Behälter verpacktes Produkt.

16. Verwendung einer Folie nach den Ansprüchen 1 bis 12 zum Verpacken, vorzugsweise zum Verpacken von Lebensmitteln.

## Revendications

1. Film thermorétrécissable multicouche formant barrière aux gaz comprenant : - une couche thermoscellable externe (1), une couche centrale (2), une couche formant barrière aux gaz (4) interposée entre la couche centrale (2) et la couche externe (6) et une couche externe (6), **caractérisé en ce que** la couche centrale (2) comprend une séquence de micro-couches (a), ladite séquence comprenant au moins une résine A sélectionnée parmi le LLDPE, l'EVA, le VLDPE, et l'ULDPE et une résine B sélectionnée parmi le VLDPE, le LDPE, le m-LLDPE, l'EPB et le LLDPE,
ladite séquence de micro-couches (a) comprenant de 10 à 100 micro-couches,
l'épaisseur totale du film étant de 20 à 60 µm et
l'épaisseur de la couche centrale étant de 10 à 50 µm.

2. Film selon la revendication 1 dans lequel ladite séquence de micro-couches (a) comprend de 25 à 50 micro-couches.

3. Film selon les revendications 1 ou 2 dans lequel ladite séquence (a) comprend au moins une paire de résines A et B sélectionnée parmi les paires LLDPE/VLDPE, EVA/LDPE, VLDPE/m-LLDPE, EVA/EPB et ULDPE/LLDPE.

4. Film selon la revendication 3 dans lequel ladite séquence (a) est constituée d'une paire de résines A et B sélectionnée parmi les paires LLDPE/VLDPE, EVA/LDPE, VLDPE/m-LLDPE, EVA/EPB et ULDPE/LLDPE.

5. Films selon les revendications 1 à 4 dans lesquels lesdites résines A et B sont mélangées (A+B), alternées (A/B) ou à la fois mélangées et alternées à l'intérieur de la séquence (a).

6. Film selon les revendications 1 à 5 dans lequel la configuration des micro-couches et la composition dans la séquence (a) est sélectionnées parmi (A+B)n, (A/B)n, (A/B)n/A, [A/(A+B)]n, [A/(A+B)]n/A et [(A+B)/B]n/(A+B), où n est un nombre entier.

7. Film selon les revendications 1 à 6 dans lequel le rapport en poids entre la résine A et la résine B dans la couche centrale est de 9:1 à 1:9, préférablement de 7:3 à 3:7.

8. Film selon les revendications 1 à 7 dans lequel l'épaisseur de la couche centrale est de 15 à 40 µm.

9. Film selon les revendications 1 à 8 dans lequel la couche thermoscellable (1) comprend une ou plusieurs résines indépendamment sélectionnées dans le groupe constitué de l'homopolymère de polyéthylène, du copolymère d'éthylène-alpha-oléfine hétérogène ou homogène, du copolymère d'éthylène-acétate de vinyle, du copolymère d'éthylène-acrylate d'éthyle, du copolymère d'éthylène-acrylate de butyle, du copolymère d'éthylène-acrylate de méthyle, du copolymère d'éthylène-acide acrylique, du copolymère d'éthylène-acide méthacrylique, de l'ionomère et de leurs mélanges.

10. Film selon les revendications 1 à 9 dans lequel la couche formant barrière (4) comprend au moins une résine formant barrière aux gaz sélectionnée parmi les copolymères de chlorure de vinylidène (PVDC), les copolymères d'éthylène-alcool de vinyle (EVOH), les polyamides et les copolymères à base d'acrylonitrile, préférablement parmi le PVDC, l'EVOH, les polyamides/copolyamides et les mélanges d'EVOH avec des polyamides/copolyamides, de manière préférée entre toutes ladite résine formant barrière aux gaz est le PVDC.

11. Film selon les revendications 1 à 10 comprenant en outre au moins une couche de liaison.

12. Film selon les revendications 1 à 11 ayant un % de rétrécissement libre dans chaque sens d'au moins 5 % préférablement d'au moins 10 %, plus préférablement d'au moins 15%, même plus préférablement d'au moins 20% à 85°C (ASTM D2732).

13. Récipient souple pour l'emballage pouvant être obtenu par l'auto-scellage du film selon les revendications 1 à 12.

14. Récipient souple selon la revendication 13 sous la forme d'un sac, d'une poche ou d'une tubulure.

15. Emballage comprenant un récipient selon les revendications 13 à 14 et un produit emballé dans ledit récipient.

16. Utilisation d'un film selon les revendications 1 à 12 pour l'emballage, préférablement pour l'emballage alimentaire.
